# EUROPEAN PATENT APPLICATION

(11) **EP 4 082 815 A1**
(43) Date of publication of application: **02.11.2022**
(21) Application number: 21171529.7
(22) Date of filing: 30.04.2021
(51) Int. Cl.: B60K 1/02, B60L 50/00, B60K 6/547, F16H 57/00

(54) **ELECTRIC PROPULSION SYSTEM AND METHOD OF CONTROLLING THE PROPULSION SYSTEM DURING BRAKING**

(71) Applicant: VOLVO TRUCK CORPORATION, 405 08 Göteborg (SE)
(72) Inventor: JAKOBSSON, Samuel, GÖTEBORG (SE); ÅSBOGÅRD, Mattias, MÖLNLYCKE (SE)
(74) Representative: Kransell & Wennborg KB

(57) **Abstract**

A method of controlling an electric vehicle propulsion system (100) comprising: a first electric machine (102) connected to a first input shaft (104) and a second electric machine (106) connected to a second input shaft (108), wherein at least one of the first and second electrical machines is connected to the corresponding input shaft via a gearbox (110) comprising a neutral gear and a dog clutch, wherein the first and second input shafts are jointly connected to an output shaft (114) operably connected to a wheel (116) of the vehicle, the method comprising: detecting (200) a braking action giving rise to torque oscillations in the propulsion system; estimating (202) that a braking torque is higher than a predetermined braking torque threshold value; and controlling (204) the gearbox to assume a neutral gear condition.

## Description

### TECHNICAL FIELD

The invention relates to a method and system for controlling an electrical propulsion system during braking of a heavy vehicle.

The invention can be applied in heavy-duty vehicles, such as trucks, buses and construction equipment. Although the invention will be described with respect to a bus, the invention is not restricted to this particular vehicle, but may also be used in other vehicles comprising an electrical propulsion system.

### BACKGROUND

There is an increasing development of alternative power sources and propulsion systems for heavy vehicles aimed at supplementing or replacing combustion engines. In view of this electric propulsion systems are becoming attractive for heavy vehicles in general and for buses in particular, where electric buses may operate in cities without causing any emissions.

An electric propulsion system for a bus must be able to handle operating conditions with many starts and stops and must also be adapted to the weight of the vehicles. In a propulsion system for a heavy vehicle it may be advantageous to use two or more electric machines for driving the vehicle. When using two electric motors connected to the wheels via individual gears the motors can be shifted individually so that one motor can deliver a torque to the wheels while the other motor is shifting, thereby providing a smooth ride for passengers.

However, for electric propulsions systems in heavy vehicles, issues may arise due to weight of the vehicle. A heavy vehicle will for example require a high starting torque and braking of the vehicle may put additional stress on the braking and propulsion system.

Accordingly, there is room for improvement in the operation of a propulsion system for a heavy vehicle such as a bus.

### SUMMARY

An object of the invention is to provide an improved method and system for controlling an electrical propulsion system during braking of a heavy vehicle.

According to a first aspect of the invention, the object is achieved by a method according to claim 1.

Claim 1 describes a method of controlling an electric vehicle propulsion system comprising: a first electric machine connected to a first input shaft and a second electric machine connected to a second input shaft, wherein at least one of the first and second electrical machines is connected to the corresponding input shaft via a gearbox comprising a neutral gear and a dog clutch, wherein the first and second input shafts are jointly connected to a an output shaft operably connected to a wheel of the vehicle. The method comprising: detecting a braking action giving rise to torque oscillations in the propulsion system; estimating that a braking torque is higher than a predetermined braking torque threshold value; and controlling the gearbox to assume a neutral gear condition.

The present invention is based on the realization that high frequency oscillations resulting from heavy braking can damage or cause excessive wear on components in a propulsion system for a heavy vehicle. Oscillations in the propulsion system are caused primarily by a very rapid and considerable wind-up of elastic parts of the mechanical systems, in combination with disturbances in the wheel torques caused by skidding and/or stick/slip of the wheels. Just after the initial wind-up, the Antilock Braking System (ABS) may become active and induce further oscillations since it will start to pulse the foundation brakes. The result of the described actions is a transient high frequency shaft speed situation that in combination with the high upstream inertia from gears and motors causes very large dynamic torque oscillations. In other words, when changing speed rapidly, the large inertia basically acts as a counteracting force. As seen from the shaft (in the high frequency domain), it will seem like one end is almost solidly fixed to the object with high inertia, while the other end is being rotated by a very large torque.

Moreover, the comparatively large shafts and electric motors used in heavy vehicles exacerbates the oscillations in comparison to propulsion systems used in e.g. cars. Additionally, the gear ratio on the lowest gear is typically very high due to the high start torque requirements on heavy commercial vehicles which is another reason why the inertia effects become large.

Furthermore, the described gearbox comprises a dog clutch and not a friction clutch or slipping clutch. A reason for using a dog clutch is that electric motors can deliver torque from standstill (while a combustion engine cannot). Moreover, it is also undesirable to have a slipping clutch due to the cost, weight and size of such a clutch.

To address the aforementioned problem, the claimed method identifies a braking action giving rise to such torque oscillations in the propulsion system and controls the gearbox to assume a neutral position, thereby reducing or eliminating oscillations depending on the configuration of the propulsion system. Since minor oscillations may occur during normal operation and during normal braking, the described method is configured to only disengage the gearbox if an estimated braking torque is sufficiently high for causing damaging oscillations. In other words, various trigger conditions can be used to estimate that the braking torque will exceed a predetermined braking torque threshold, thereby leading to potentially damaging torque oscillations.

According to a second aspect of the invention, the object is achieved by propulsion system for a vehicle comprising: a first electric machine connected to a first input shaft; a second electric machine connected to a second input shaft, wherein the first and second input shafts are jointly connected to an output shaft operably connected to a wheel of the vehicle; a gearbox comprising a neutral gear and a dog clutch arranged to connect at least one of the first and second electric machines to the corresponding input shaft; and a propulsion system control unit configured to: detect a braking action giving rise to torque oscillations in the propulsion system; estimate that a braking torque is higher than a predetermined braking torque threshold value; and control the gearbox to assume a neutral gear condition.

Effects and features of this second aspect of the present invention are largely analogous to those described above in connection with the first aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a block chart illustrating a propulsion system according to an embodiment of the invention, and

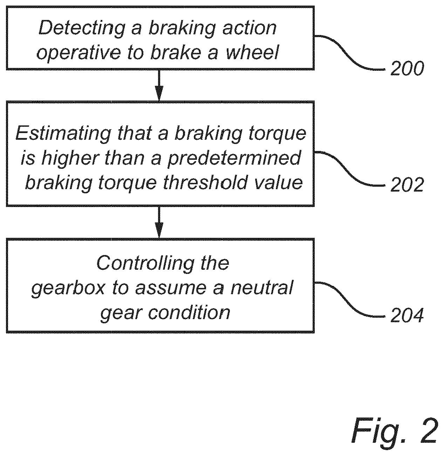

Fig. 2 is a flow chart outlining steps of a method of controlling a propulsion system according to an embodiment of the invention,

### DETAILED DESCRIPTION OF EXAMPLE EMBODIMENTS OF THE INVENTION

In the present detailed description, various embodiments of a propulsion system according to the present invention are mainly discussed with reference to an electric propulsion system in a bus. It should be noted that this by no means limits the scope of the present invention which is equally applicable to electric propulsion systems in other types of vehicles, and in particular in heavy vehicles.

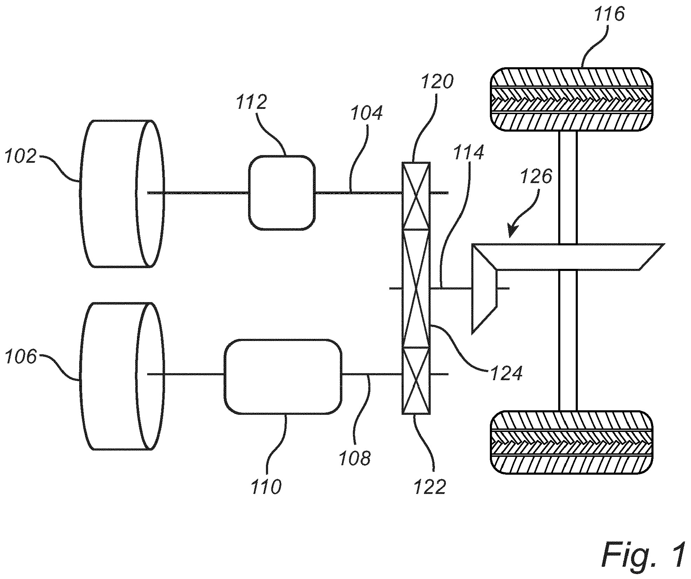

Fig. 1 schematically illustrates a propulsion system 100 for a vehicle comprising a first electric machine 102 connected to a first input shaft 104 and a second electric machine 106 connected to a second input shaft 108.

In the illustrated implementation, the propulsion system comprises a fixed ratio gear 112 arranged to connect the first electric machine 102 to the first input shaft 104 and a gearbox 110 comprising a neutral gear and a dog clutch arranged to connect the second electric machine 106 to the second input shaft 108. It should however be noted that many different configurations of gearboxes and electric motors may be used. For example, both electric machines may be connected to the corresponding shaft via gearboxes having a neutral gear and a dog clutch. The reason for the illustrated implementation is that it has been found that the requirements for start-up torque could be met by shifting only one motor, and then cost and weight can be reduced by using a fixed gear for the other motor. An effect of using a fixed gear 112 is that the first electric machine 102 cannot be disconnected to reduce oscillations, but it has been seen that oscillations can be significantly reduced by disengaging the second electric machine 106. The two electric machines may have the same size, or they may have different sizes depending on what is desirable in a particular propulsion system.

Moreover, the first and second input shafts are jointly connected to an output shaft 114 operably connected to a wheel 116 of the vehicle. The input shafts may be connected to the wheels in any way known to the skilled person.

The propulsion system further comprises a propulsion system control unit (not shown) configured perform the steps of a method according to various embodiments of the invention. The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. Moreover, the functionality of the control unit may be provided by a single vehicle ECU (electronic control unit) or it may be distributed among a plurality of control units.

The control unit is configured to detect 200 a braking action giving rise to torque oscillations in the propulsion system 100, estimate 202 that a braking torque is higher than a predetermined braking torque threshold value; and controlling 204 the gearbox 110 to assume a neutral gear condition. In the neutral gear condition, no torque is transferred by the gearbox and the oscillations are thereby reduced or eliminated.

Moreover, the method may further comprise estimating that torque oscillations in the propulsion system resulting from the braking action exceed a torque oscillation threshold value, and controlling the gearbox 110 to assume a neutral gear condition when both of the estimated braking torque and the estimated torque oscillations exceed the respective threshold value. Thereby, for a given braking action, the torque oscillations are estimated so that only when the oscillations are expected to exceed a torque oscillation threshold is the gearbox put into neutral gear. The torque oscillation threshold value can describe a torque amplitude and the threshold value may also depend on the frequency of the oscillations. For example, the oscillation threshold value is preferably set so that only oscillations having frequencies higher than a shaft rotational velocity are taken into account, and that the peak amplitude of the torque exceeds a threshold value.

The method and system may further be configured to estimate a braking torque and/or torque oscillations based on one or more of brake pedal velocity, brake pedal position, brake system pressure, detecting activation of an anti-lock braking system, activation of an anti-collision system, wheel speed reduction and vehicle deceleration. Any of the aforementioned parameters can be used to detect or predict a braking action which either has a torque exceeding a braking torque threshold or which is known to give rise to torque oscillations exceeding a torque oscillation threshold value. Thereby, an indication of excessive braking can be used as a trigger condition for making the gearbox 110 assume a neutral condition. Accordingly, the method may comprise determining any parameter indicative of a present or upcoming braking torque, where the resulting braking torque is known to give rise to torque oscillations above a predetermined torque oscillation threshold.

An accelerometer or similar sensor can be used to detect a vehicle deceleration and/or a wheel speed reduction, which in turn can be compared to threshold values to estimate of the braking action causing the deceleration or wheel speed reduction will give rise to excessive torque oscillations or not.

In some implementations, the braking action can be predicted so that the gearbox 110 can be put into neutral gear condition before any torque oscillations occur. For example, if a brake pedal velocity is detected which is indicative of hard braking, the gearbox can be put into neutral before the brake system has time to pressurize and start the braking action, thereby avoiding torque oscillations. The same is true if a signal from a collision detection system is used which warns of an upcoming collision and automatically activates the braking system. In other implementations, vehicle deceleration can be measured by an accelerometer or a sudden change in wheel speed can be used to trigger the action to put the gearbox in neutral condition. Even though this may give rise to some torque oscillations, they can be significantly reduce compared to if the gearbox remains engaged. In short, one or more of the above parameters can be compared with a corresponding threshold value to determine if the detected or upcoming braking action give rise to torque oscillations. The threshold values can be predetermined by testing of a particular propulsion system in a particular vehicle. The threshold values may also be dynamic or adjustable.

Furthermore, different braking situations may give rise to different torque oscillation behaviors, where activation of an Antilock Braking System (ABS) can give rise to higher torque oscillations than normal braking. Thereby, activation of the ABS can be used as a condition to put the gearbox in neutral gear, i.e. disengage the gearbox.

As further illustrated in the example Fig. 1, the first input shaft 104 is connected to a first gearwheel 120, the second input shaft 108 is connected to a second gearwheel 122 and the output shaft 114 is connected to a third gear wheel 124, and wherein the third gear wheel is in meshing engagement with the first gear wheel and with the second gear wheel. Moreover, the output shaft 114 is connected to the wheels 116 via a differential. The described connection in principle allow oscillations to propagate unhindered from the wheel to the gearbox and motors.

According to one embodiment of the invention, an actuator of the dog clutch can be pre-tensioned such that the gearbox assumes a neutral gear condition when a torque in the dog clutch is below a predetermined torque threshold value. By using a dog clutch, i.e. a clutch comprising teeth engaging with each other, there is no slipping the teeth are engaged. Moreover, if there is a high torque over the engaged clutch it may be difficult or at least require a large force to disengage the clutch. Thereby, an actuator of the clutch may be pre-pretensioned so that the clutch disengages when the torque oscillations are at or near a zero-crossing, i.e. when the torque across the clutch is close to zero. The actuator can for example be pre-tensioned by opening an air valve in a pneumatic control system.

Moreover, in situations where the torque oscillations have not yet occurred but are predicted to occur, the clutch can be preemptively disengaged. Examples of such situations are described above and may include when a collision warning system is activated or when the movement and/or position of the brake pedal is observed.

According to one embodiment of the invention claims, further comprising reengaging the gearbox in response to a torque request. Accordingly, the gearbox may remain in neutral gear until a vehicle operator again requests torque for example by pressing a gas pedal.

There is also provided a computer program comprising program code means for performing the steps of the method according to any of the above described embodiments when the program is run on a computer. There is also provided a computer readable medium carrying a computer program comprising program code means for performing the steps of any of the above described embodiments when the program product is run on a computer.

It is to be understood that the present invention is not limited to the embodiments described above and illustrated in the drawings; rather, the skilled person will recognize that many changes and modifications may be made within the scope of the appended claims.

## Claims

1. A method of controlling an electric vehicle propulsion system (100) comprising:
a first electric machine (102) connected to a first input shaft (104) and a second electric machine (106) connected to a second input shaft (108), wherein at least one of the first and second electrical machines is connected to the corresponding input shaft via a gearbox (110) comprising a neutral gear and a dog clutch, wherein the first and second input shafts are jointly connected to an output shaft (114) operably connected to a wheel (116) of the vehicle, the method comprising:
detecting (200) a braking action giving rise to torque oscillations in the propulsion system;
estimating (202) that a braking torque is higher than a predetermined braking torque threshold value; and
controlling (204) the gearbox to assume a neutral gear condition.

2. The method according to claim 1, further comprising:
estimating that torque oscillations in the propulsion system resulting from the braking action exceed a torque oscillation threshold value, and
controlling the gearbox to assume a neutral gear condition when both of the estimated braking torque and the estimated torque oscillations exceed the respective threshold value.

3. The method according to claim 1 or 2, wherein estimating a braking torque comprises detecting at least one of brake pedal velocity, brake pedal position, brake system pressure, detecting activation of an anti-lock braking system, activation of an anti-collision system, wheel speed reduction and vehicle deceleration.

4. The method according to any one of the preceding claims, wherein the method comprises pre-tensioning an actuator of the dog clutch such that the gearbox assumes a neutral gear condition when a torque in the dog clutch is below a predetermined torque threshold value.

5. The method according to claim 4, wherein the actuator is pre-tensioned using a pneumatic system.

6. The method according to any one of the preceding claims, further comprising reengaging the gearbox in response to a torque request.

7. A computer program comprising program code means for performing the steps of any of claims 1-6 when the program is run on a computer.

8. A computer readable medium carrying a computer program comprising program code means for performing the steps of any of claims 1 to 6 when the program product is run on a computer.

9. A propulsion system (100) for a vehicle comprising:
a first electric machine (102) connected to a first input shaft (104);
a second electric machine (106) connected to a second input shaft (108), wherein the first and second input shafts are jointly connected to an output shaft (114) operably connected to a wheel (116) of the vehicle;
a gearbox (110) comprising a neutral gear and a dog clutch arranged to connect at least one of the first and second electric machines to the corresponding input shaft; and
a propulsion system control unit configured to:
detect a braking action giving rise to torque oscillations in the propulsion system;
estimate that a braking torque is higher than a predetermined braking torque threshold value; and
control the gearbox to assume a neutral gear condition.

10. The propulsion system according to claim 9, comprising:
a fixed ratio gear (112) arranged to connect the first electric machine to the first input shaft;
a gearbox (110) comprising a neutral gear and a dog clutch arranged to connect the second electric machine to the second input shaft.

11. The propulsion system according to claim 9 or 10, wherein the propulsion system control unit configured to:
estimate that torque oscillations in the propulsion system resulting from the braking action exceed a torque oscillation threshold value, and
control the gearbox to assume a neutral gear condition when both of the estimated braking torque and the estimated torque oscillations exceed the respective threshold value.

12. The propulsion system according to any one of claims 9 to 11, wherein estimating a braking torque comprises detecting at least one of brake pedal velocity, brake pedal position, brake system pressure, detecting activation of an anti-lock braking system, wheel speed reduction and vehicle deceleration.

13. The propulsion system according to any one of claims 9 to 12, wherein the propulsion system control unit is further configured to pre-tension an actuator of the dog clutch such that the gearbox assumes a neutral gear condition when a torque in the dog clutch is below a predetermined torque threshold value.

14. The propulsion system according to any one of claims 9 to 13, wherein the first input shaft (104) is connected to a first gear wheel (120), the second input shaft (108) is connected to a second gear wheel (122) and the output shaft (114) is connected to a third gear wheel (124), and wherein the third gear wheel is in meshing engagement with the first gear wheel and with the second gear wheel.

15. A vehicle comprising a propulsion system according to any one of claims 9 to 14.
